# EUROPÄISCHE PATENTSCHRIFT

(11) **EP 0 478 822 B1**
(45) Veröffentlichungstag und Bekanntmachung des Hinweises auf die Patenterteilung: **26.01.1994**
(21) Anmeldenummer: 90118905.0
(22) Anmeldetag: 03.10.1990
(51) Int. Cl.: A47G 19/28, A47J 43/14

(54) **Vorrichtung zum Schälen von gekochten Eiern**
Device for removing the shells from boiled eggs
Dispositif pour peler les oeufs durs

(43) Veröffentlichungstag der Anmeldung: 08.04.1992
(73) Patentinhaber: ERICH BERGMEIER MASCHINENFABRIK, D-32120 Hiddenhausen (DE)
(72) Erfinder: Bergmeier, Erich, D-4901 Hiddenhausen 2 (DE)
(74) Vertreter: Stracke, Alexander, Dipl.-Ing.

(56) Entgegenhaltungen:
- US-A- 3 552 458
- US-A- 3 877 362
- US-A- 4 191 102

## Beschreibung

Die vorliegende Erfindung betrifft eine Vorrichtung zum Schälen von gekochten Eiern mit zwei horizontal verlaufenden und achsparallel zueinander angeordneten, rotierend angetriebenen Schälwalzen und einer oberhalb der Schälwalzen angeordneten Schiebe- und Mitnahmevorrichtung, welche in Achsrichtung der Schälwalzen bewegt wird und mittels derer ein zu schälendes Ei in dem von den beiden Schälwalzen gebildeten Walzenspalt bewegt wird.

Eine Vorrichtung zum Schälen von Eiern der gattungsgemäßen Art ist aus dem Dokument US-A 35 52 458 bekannt.

Bei der bekannten Vorrichtung sind die Schälwalzen gegensinnig drehend angetrieben und die Schiebe- und Mitnahmevorrichtung besteht aus einem endlosen Band, welches ständig in einer Richtung bewegt wird.

Durch den gegensinnigen Antrieb der beiden Schälwalzen wird ein zu schälendes Ei in den Walzenspalt eingezogen und durch die Schälwalzen geschält.

Durch die Schiebe- und Mitnahmevorrichtung wird ein zu schälendes Ei einer Aufgabestelle ausgehend in Achsrichtung längs der beiden Schälwalzen hinweggeführt. Der vorliegenden Erfindung liegt die Aufgabe zugrunde, eine Vorrichtung der gattungsgemäßen Art zu schaffen, die bei äußerst einfachem konstruktiven Aufbau eine schonende und vollständige Entfernung der Schale von einem gekochten Ei ermöglicht.

Diese Aufgabe wird erfindungsgemäß dadurch gelöst, daß die Schälwalzen gleichsinnig drehend angetrieben sind und daß die Schiebe- und Mitnahmevorrichtung und damit auch ein zu schälendes Ei hin- und herbewegt wird.

Eine derart gestaltete Schälvorrichtung weist einen unkomplizierten mechanischen Aufbau auf, daß außer den beiden Schälwalzen lediglich noch eine Schiebe- und Mitnahmevorrichtung benötigt wird. Eine derartige Schälvorrichtung bewirkt ein schonendes und vollständiges Schälen eines gekochten Eies dadurch, daß das Ei zwischen den beiden Schälwalzen ständig gedreht wird und gleichzeitig im Walzenspalt hin- und hergeschoben wird. Durch die entsprechenden Reibkräfte zwischen der Eischale und den Schälwalzen wird bei diesen Bewegungen eine vollständige Entfernung der Eischale bewirkt, ohne daß das gekochte Ei selbst beschädigt wird. Die Eischale fällt durch den Walzenspalt nach unten und kann dann in beliebiger Weise entfernt werden.

Eine besonders einfache Ausführungsform der Schiebe- und Mitnahmevorrichtung besteht aus zwei mit Abstand zueinander angeordneten Schiebeblechen.

Diese sind vorteilhafterweise gegenüber der Vertikalen gegensinnig zueinander geneigt derart, daß die beiden Schiebebleche einen sich in Richtung der Schälwalzen erweiternden Kanal bilden.

Durch die Schrägstellung der beiden Schiebebleche im angegebenen Sinne wird beim Hin- und Herbewegen eines Eies im Walzenspalt der beiden Schälwalzen ein gewisser Andruck des zu schälenden Eies an die Schälwalzen erzielt, so daß der Schälvorgang zusätzlich intensiviert wird.

Weitere Merkmale der Erfindung sind Gegenstand weiterer Unteransprüche.

In den beigefügten Zeichnungen ist ein Ausführungsbeispiel der Erfindung dargestellt, welches im folgenden näher beschrieben wird. Es zeigen:
- Fig. 1: eine stark schematisiert dargestellte Seitenansicht einer erfindungsgemäßen Vorrichtung
- Fig. 2: eine schematisch dargestellte Draufsicht auf die Vorrichtung gemäß Fig. 1
- Fig. 3: eine Schälwalze einschließlich eines Antriebes für die Schälwalze und eine oberhalb der Schälwalze angeordnete Schiebe- und Mitnahmevorrichtung

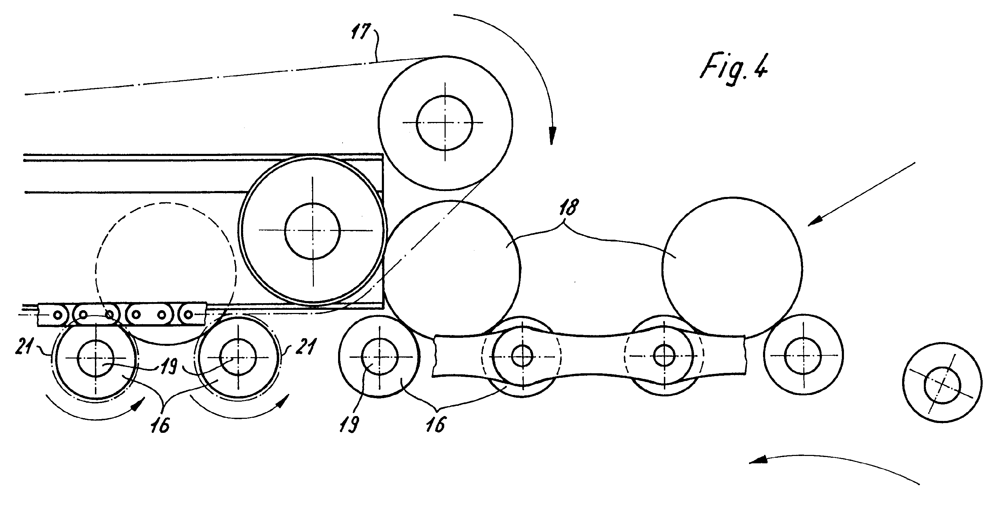

- Fig. 4: eine schematische Darstellung des Einlaufbereiches der Vorrichtung gemäß Fig. 1.

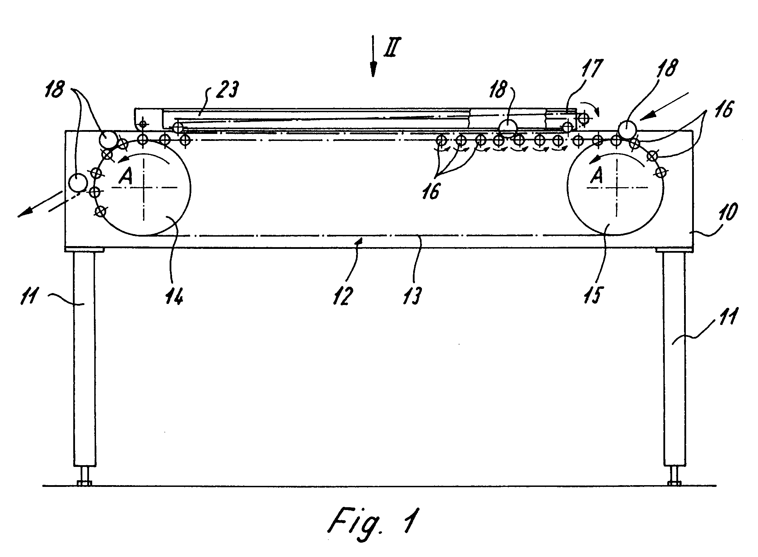

In Fig. 1 ist in schematischer Darstellung eine Vorrichtung zum Schälen von gekochten Eiern gezeigt, die ein Maschinengestell 10, welches auf vier Füßen 11 steht, aufweist. Die Vorrichtung ist mit einem umlaufenden Kettentrieb 12 ausgerüstet, der aus einer Kette 13 und zwei Umlenkkettenrädern 14, 15 gebildet ist. In Fig. 1 sind die Umlenkkettenräder 14, 15 entgegen dem Uhrzeigersinne in den Pfeilrichtungen A antreibbar. Der Einfachheit halber ist der Antrieb nicht dargestellt.

An der Kette 13 sind eine Vielzahl von noch näher zu erläuternden Schälwalzen 16 angeordnet, die in einem geringen Abstand zueinander stehen. Oberhalb des oberen Trums des Kettentriebes 12 ist ein weiterer Kettentrieb 17 vorgesehen, durch den die Schälwalzen 16 in Drehung versetzt werden. Die Drehrichtungen der Schälwalzen 16 stimmen mit den Drehrichtungen der Umlenkkettenräder 14, 15 des Kettentriebes 12 überein, wie in Fig. 1 gezeigt. Die zu schälenden Eier werden in der Darstellung nach Fig. 1 auf der rechten Seite des Kettentriebes 12 aufgegeben und an der linken Seite in nicht näher erläuterter Weise wieder abtransportiert. Der Einfachheit halber sind die Eier andeutungsweise als Kreise dargestellt und durch das Bezugszeichen 18 gekennzeichnet. Die dem oberen Trum des Kettentriebes 12 zugeordneten Schälwalzen 16 bilden eine horizontal verlaufende Schälstrecke für die Eier 18.

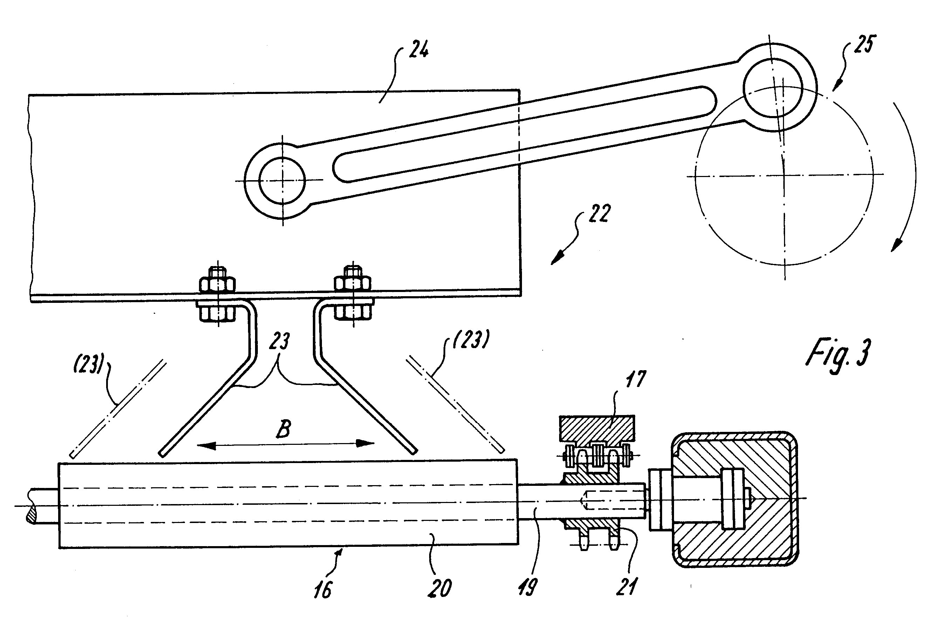

In Fig. 3 ist der Antrieb für die Schälwalzen 16 genauer dargestellt. Danach besteht jede Schälwalze 16 aus einer durchgehenden Welle 19 und einem Bezug 20 aus Gummi oder einem gummiähnlichen Kunststoff, wobei allerdings darauf hinzuweisen ist, daß die Schälwalzen auch insgesamt aus einem Material bestehen können, welches in Kombination mit Eierschalen eine hohe Reibungszahl aufweist.

Um die Schälwalzen 16 in Drehung zu versetzen, ist auf das rechte, gegenüber dem Bezug 20 vorstehende Ende der Welle 19 ein zweireihiges Kettenrad 21 drehfest aufgesetzt. Oberhalb des Kettenrades 21 läuft der mit allen Kettenrädern der Schälwalzen in Eingriff stehende untere Trum des Kettentriebes 17. Die Schälwalzen 16 werden also ausschließlich dann angetrieben, wenn ihre Kettenräder 21 im Eingriffsbereich des Kettentriebes 17 liegen. Dies ist dann der Fall, wenn die Schälwalzen 16 sich im Bereich des oberen Trum des Kettentriebes 12 befinden.

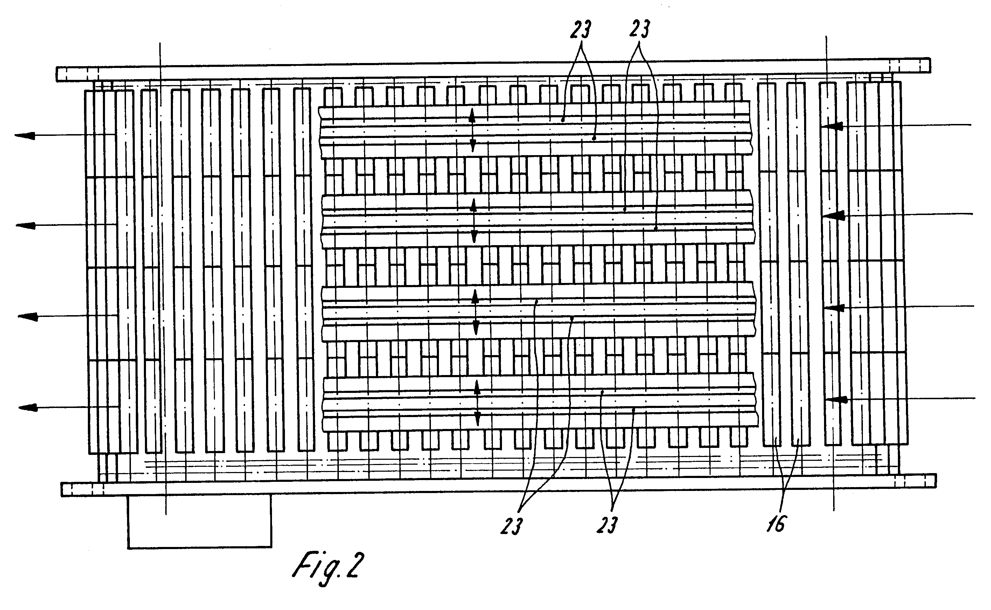

Aus Fig. 2 geht hervor, daß oberhalb der Schälwalzen 16 eine Schiebe- und Mitnahmevorrichtung 22 angeordnet ist. Diese Schiebe- und Mitnahmevorrichtung besteht vorzugsweise aus zwei mit Abstand zueinander angeordneten Schiebeblechen 23, die an einem Halter 24 befestigt sind. Der Halter 24 ist mit einem Kurbeltrieb 25 gekoppelt und kann im Sinne des Doppelpfeiles B hin- und herbewegt werden, wobei dann selbstverständlich auch die am Schieber 24 befestigten Schiebebleche 23 hin- und herbewegbar sind.

Die Schiebebleche 23 sind gegenüber der Vertikalen gleichsinnig zueinander geneigt derart, daß die beiden Schiebebleche 23 einen sich in Richtung der Schälwalzen 16 erweiternden Kanal bilden. Die beiden Endpositionen beim Hin- und Herschieben der beiden Schiebebleche 23 sind in Fig. 3 durch die strichpunktierten Linien angedeutet. Der lichte Abstand der beiden Schiebebleche 23 zueinander entspricht mindestens der Länge eines zu schälenden Eies.

Wie Fig. 2 deutlich macht, sind die Schälwalzen 16 derart lang, daß mehrere Eier nebeneinander auf diesen Schälwalzen 16 abgelegt und geschält werden können. Zu diesem Zweck sind dann oberhalb der Schälwalzen 16 mehrere, paarweise angeordnete Schiebebleche 23 vorgesehen, so daß für mehrere, nebeneinanderliegende Eier 18 verschiedene "Schälkanäle" gebildet sind. Im dargestellten Ausführungsbeispiel sind vier Schäleinrichtungen nebeneinander angeordnet. Die zu schälenden Eier werden, wie aus Fig. 1 ersichtlich, jeweils zwischen zwei Schälwalzen 16 aufgegeben. Zwischen diesen beiden Schälwalzen 16 werden die Eier ständig gedreht und gleichzeitig durch die Schiebebleche 23 in Achsrichtung der beiden Schälwalzen hin- und hergeschoben. Durch diese Bewegung wird eine vollständige Trennung der Eischale vom gekochten Ei bewirkt, wobei durch die Länge der Förderstrecke des oberen Trums des Kettentriebes 12 eine ausreichend lange Verweildauer eines zu schälenden Eies zwischen zwei Schälwalzen gewährleistet ist.

Durch die Möglichkeit, mehrere Schälstrecken oder Schäleinrichtungen nebeneinander anordnen zu können, läßt sich eine erfindungsgemäß aufgebaute Vorrichtung auf hohe Schälleistungen auslegen, ohne daß hierfür komplizierte Einrichtungen notwendig werden.

Die Schälwalzen 16 können bei Bedarf auch mit Noppen oder Nocken versehen sein.

## Patentansprüche

1. Vorrichtung zum Schälen von gekochten Eiern (18), mit zwei horizontal verlaufenden und achsparallel zueinander angeordneten, rotierend angetriebenen Schälwalzen (16) und einer oberhalb der Schälwalzen (16) angeordneten Schiebe- und Mitnahmevorrichtung (22), welche in Achsrichtung der Schälwalzen (22) bewegt wird und mittels derer ein zu schälendes Ei (18) in dem von den beiden Schälwalzen (16) gebildeten Walzenspalt bewegt wird, **dadurch gekennzeichnet,** daß die Schälwalzen (16) gleichsinnig drehend angetrieben sind und daß die Schiebe- und Mitnahmevorrichtung (22) und damit auch ein zu schälendes Ei (18) hin- und herbewegt wird.

2. Vorrichtung nach Anspruch 1, dadurch gekennzeichnet, daß die Schiebe- und Mitnahmevorrichtung aus zwei mit Abstand zueinander agenordneten Schiebeblechen (23) besteht.

3. Vorrichtung nach Anspruch 2, dadurch gekennzeichnet, daß die Schiebebleche (23) gegenüber der Vertikalen gegensinnig zueinander geneigt sind derart, daß die beiden Schiebebleche (23) einen sich in Richtung der Schälwalzen (16) erweiternden Kanal bilden.

4. Vorrichtung nach Anspruch 2 oder 3, dadurch gekennzeichnet, daß die Schiebebleche (23) an einem Mitnehmer (24) angeschlossen sind, der seinerseits mittels eines Kurbeltriebes (25) hin- und herbewegbar ist.

5. Vorrichtung nach einem oder mehreren der Ansprüche 1 bis 4, dadurch gekennzeichnet, daß eine Vielzahl von Schälwalzen-Paaren (16) an einem umlaufenden Ketten- oder Riementrieb (12) angeordnet ist und sich die Schiebebleche (23) nahezu über die gesamte Länge des oberen Trums des Ketten- oder Riementriebes (12) erstrecken.

6. Vorrichtung nach einem oder mehreren der vorhergehenden Ansprüche, dadurch gekennzeichnet, daß die Länge der Schälwalzen (16) so gewählt ist, daß mehrere zu schälende Eier (18) nebeneinander aufgenommen werden können und daß für jedes zu schälende Ei (18) ein Paar von Schiebeblechen (23) vorgesehen ist.

7. Vorrichtung nach einem oder mehreren der vorhergehenden Ansprüche, dadurch gekennzeichnet, daß die Schälwalzen (16) aus einem in Kombination mit Eierschalen eine hohe Reibungszahl aufweisenden Material bestehen oder mit einem derartigen Material beschichtet sind.

8. Vorrichtung nach einem oder mehreren der vorhergehenden Ansprüche, dadurch gekennzeichnet, daß die Schälwalzen (16) auf ihrem Umfang mit Noppen, Nocken od.dgl. ausgestattet sind.

## Claims

1. Apparatus for shelling boiled eggs (18), with two horizontally extending, rotationally driven shelling rollers (16) arranged to be axially parallel with one another and a sliding and transporting device (22) arranged above the shelling rollers (16) which is moved in the direction of the axis of the shelling rollers (22)[*sic*], and by means thereof, an egg to be shelled (18) is moved in the gap between the rollers formed by the two shelling rollers (16), characterised in that the shelling rollers (16) are rotationally driven in the same direction and that the sliding and transporting device (22) and therefore also an egg to be shelled (18) is moved to and fro.

2. Device according to claim 1, characterised in that the sliding and transporting device consists of two sliding plates (23).

3. Device according to claim 2, characterised in that the sliding plates (23) are inclined in opposite directions to one another with respect to the vertical, in such a way that the two sliding plates (23) form a channel which widens in the direction of the shelling rollers (16).

4. Device according to claim 2 or 3, characterised in that the sliding plates (23) are connected to a drive element, which itself is movable to and fro by means of a crank mechanism (25).

5. Device according to one or more of claims 1 to 4, characterised in that a plurality of pairs of shelling rollers (16) are arranged on a revolving chain or belt drive (12) and the sliding plates (23) extend above virtually the entire length of the upper strand of the chain or belt drive (12).

6. Device according to one or more of the previous claims, characterised in that the length of the shelling rollers (16) is selected so that a plurality of eggs to be shelled (18) can be received beside one another, and that for each egg to be shelled (18) a pair of sliding plates (23) is provided.

7. Device according to one or more of the previous claims, characterised in that the shelling rollers (16) are composed of a material or are coated with a material which in combination with egg shells has a high friction quotient.

8. Device according to one or several of the previous claims, characterised in that the shelling rollers (16) are equipped about their periphery with knobs, cams or the like.

## Revendications

1. Dispositif pour éplucher des oeufs cuits (18) comportant deux cylindres d'épluchage (16) entraînés en rotation disposés horizontalement, leurs axes étant parallèles l'un par rapport à l'autre, ainsi qu'un dispositif de poussée et d'entraînement (22) placé au-dessus des cylindres d'épluchage (16) qui est déplacé en direction axiale des cylindres d'épluchage (16) et au moyen duquel un oeuf (18) à éplucher est déplacé dans l'espace entre les cylindres formé par les deux cylindres d'épluchage (16), caractérisé en ce que les deux cylindres d'épluchage (16) sont entraînés dans le même sens de rotation, et en ce que le dispositif de poussée et d'entraînement (22), et par conséquent aussi l'oeuf (18) à éplucher, sont soumis à un mouvement de va-et-vient.

2. Dispositif selon la revendication 1, caractérisé en ce que le dispositif de poussée et d'entraînement est composé de deux tôles de poussée (23) disposées à une certaine distance l'une de l'autre.

3. Dispositif selon la revendication 2, caractérisé en ce que les tôles de poussée (23) sont inclinées dans un sens inverse l'une à l'autre par rapport à la verticale, de telle sorte que les deux tôles de poussée (23) constituent un canal s'élargissant en direction des cylindres d'épluchage (16).

4. Dispositif selon l'une des revendications 2 ou 3, caractérisé en ce que les tôles de poussée (23) sont connectées à un taquet entraîneur (24), lequel peut de son côté effectuer un mouvement de va-et-vient au moyen d'une transmission à manivelle (25).

5. Dispositif selon l'une ou plusieurs des revendications 1 à 4, caractérisé en ce que de multiples couples de cylindres d'épluchage (16) sont disposés sur un entraînement par chaîne ou par courroie circonférentielle (12), et en ce que les tôles de poussée (23) s'étendent pratiquement sur toute la longueur du brin supérieur de la propulsion à chaîne ou à courroie (12).

6. Dispositif selon l'une ou plusieurs des revendications précédentes, caractérisé en ce que la longueur des cylindres d'épluchage (16) est choisie de telle sorte que plusieurs oeufs (18) à éplucher puissent être déposés l'un à côté de l'autre, et en ce qu'un couple de tôles de poussée (23) est prévu pour chaque oeuf (18) a éplucher.

7. Dispositif selon l'une ou plusieurs des revendications précédentes, caractérisé en ce que les cylindres d'épluchage (16) sont composés d'un matériau présentant un coefficient de frottement élevé en combinaison avec des coquilles d'oeufs, ou revêtus d'un matériau de ce type.

8. Dispositif selon l'une ou plusieurs des revendications précédentes, caractérisé en ce que la circonférence des cylindres d'épluchage (16) est équipée de parties en relief, de cames ou d'éléments similaires.
